# EUROPÄISCHE PATENTSCHRIFT

(11) **EP 1 593 571 B1**
(45) Veröffentlichungstag und Bekanntmachung des Hinweises auf die Patenterteilung: **30.04.2008**
(21) Anmeldenummer: 05016869.9
(22) Anmeldetag: 04.02.2004
(51) Int. Cl.: B61H 13/24, B61H 13/36

(54) **Klotzbremseinrichtung eines Drehgestells eines Schienenfahrzeugs mit sphärisch gelagerten Hängelaschen**
Tread brake device for the bogie of a railway vehicle with spherically pivoted hanging support links
Installation de frein à sabot pour un bogie d'un véhicule ferroviaire avec bielles de support à logement sphérique

(30) Priorität: 06.02.2003 DE 10304716
(43) Veröffentlichungstag der Anmeldung: 09.11.2005
(62) Teilanmeldung aus: 04002399.6
(73) Patentinhaber: KNORR-BREMSE Systeme für Schienenfahrzeuge GmbH, 80809 München (DE)
(72) Erfinder: Staltmeir, Josef, 80807 München (DE); Fuderer, Erich, 82256 Fürstenfeldbruck (DE); Wolfsteiner, Peter, 80797 München (DE); Ernstberger, Heinrich, 80469 München (DE); Elstorpff, Marc-Gregory, 80638 München (DE)
(74) Vertreter: Mattusch, Gundula

(56) Entgegenhaltungen:
- WO-A-00/02756
- WO-A-01/36247
- WO-A-02/074601

## Beschreibung

### Stand der Technik

Die Erfindung betrifft eine Klotzbremseinrichtung für ein Drehgestell eines Schienenfahrzeugs beinhaltend zwei Radsätze mit je zwei Rädern, sowie zwei jeweils einer Radachse zugeordnete und parallel zu dieser vedaufende Bremsbalken, welche Bremsklötze tragen und über Druckstangen miteinander in Verbindung stehen, die durch wenigstens einen druckmittelbetätigten Zylinder-Kolbentrieb zum Bremseingriff der Bremsklötze mit zugeordneten Bremsflächen der Räder betätigbar sind, wobei die Klotzbremseinrichtung als Bremsmodul beinhaltend wenigstens die Bremsbalken, die Druckstangen, die Bremsklötze und den Zylinder-Kolbentrieb durch Hängelaschen am Drehgestell hängend befestigt ist, und wobei die Hängelaschen durch jeweils sphärische Lager einendseitig am Drehgestell und anderendseitig an den Bremsbalken allseitig schwenkbar gelagert sind, gemäß der Gattung von Anspruch 1.

Eine Klotzbremseinrichtung ist beispielsweise aus der WO 00/02756 bekannt, wobei die Bremsbalken durch Plattenprofile gebildet werden. Das als U- oder Z-Profil ausgebildete Plattenprofil eines Bremsbalkens trägt zwei druckmittelbetätigte Zylinder-Kolbentriebe als separate, eigenständige Baueinheiten, welche je eine Druckstange betätigen. Die Mittelachsen der Zylinder-Kolbentriebe erstrecken sich längs der Querbalken. Folglich findet die Ausfahrbewegung der Kolben parallel zu den Radachsen statt und muss durch Umlenkungsgetriebe auf die quer zu den Radachsen angeordneten Druckstangen umgelenkt werden, welche im Bremsfall die Querbalken voneinander weg und die Bremsklötze gegen die Räder pressen. Die Bremsbalken sind mittels Hängelaschen am Drehgestell angelenkt, welche einen Drehfreiheitsgrad um Schwenkachsen besitzen, die parallel zu den Radachsen sind.

Eine gattungsgemäß Klotzbremseinrichtung ist aus der WO 01/36247 A bekannt. Weil die Hängelaschen durch sphärische Lager einendseitig am Drehgestell und anderendseitig an den Bremsbalken allseitig schwenkbar gelagert sind, können sich die Hängelaschen bei Querbewegungen der Radachsen schräg stellen, wodurch die Bremsbalken auch Querbewegungen der Radachsen zu folgen vermögen, welche beispielsweise von einer nachgiebigen Lagerung des Fahrwerks herrühren. Diese Kinematik gewährleistet, dass die an den radial vorstehenden Spurkränzen der Räder seitlich anstehenden und weiterhin senkrecht gehaltenen Bremsklötze in der Radebene und im wesentlichen parallel zur Radbremsfläche ausgerichtet bleiben. Damit wird eine stets optimale Ausrichtung der Bremsklötze in Bezug zu den Radbremsflächen gewährleistet. Mithin wird eine Schrägstellung der Bremsklötze relativ zu den Radbremsflächen vermieden, die in einer Reduzierung der wirksamen Bremsfläche und damit in einer Minderung der Bremsleistung resultieren würde.

Der vorliegenden Erfindung liegt demgegenüber die Aufgabe zugrunde, eine Klotzbremseinrichtung der eingangs erwähnten Art derart weiterzubilden, dass sie sich durch eine verbesserte sphärische Lagerung auszeichnet.

Erfindungsgemäß wird diese Aufgabe durch die kennzeichnenden Merkmale von Anspruch 1 gelöst.

### Vorteile der Erfindung

Erfindungsgemäß sind die drehgestellseitigen sphärischen Lager in Form von Sphäroblöcken vorhanden, wobei ein Kugelkopf eines Kugelbolzens innerhalb einer Gummihülle mit komplementärer sphärischer Lagerfläche gelagert ist. Die den Kugelkopf umschließende Gummihülle bewirkt durch ein Rückstellmoment infolge ihrer Elastizität, dass sich die Klotzbremseinrichtung beim Übergang von der Zuspannstellung in die Lösestellung in die Ausgangslage zurückstellt, in welcher die Bremsklötze nahezu äquidistant von den zugeordneten Bremsflächen der Räder entfernt sind.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform sind die Bremsklötze tragende Bremsschuhe an den Bremsbalken um parallel zu den Radachsen verlaufende Schwenkachsen schwenkbar angelenkt. Hierdurch sind die Bremsschuhe kippbar und können sich beim Bremsen lageoptimal an die Radbremsflächen anlegen. Die schwenkbare Lagerung kann durch Bremsschuhbolzen realisiert sein, welche einerseits durch Durchgangsbohrungen in gabelförmig ausgebildeten, je endseitig an den Bremsbalken angeordneten, die Bremsschuhe umgreifenden Aufnahmen sowie durch eine zentrale Durchgangsbohrung des Bremsschuhs gesteckt sind.

Gemäß einer weiteren Maßnahme können die Hängelaschen an den die Bremsklötze tragenden Bremsschuhen allseitig schwenkbar gelagert sein. Dadurch entsteht eine sehr kompakte Lagerung.

### Zeichnungen

Ausführungsbeispiele der Erfindung sind in der Zeichnung dargestellt und in der nachfolgenden Beschreibung näher erläutert. In der Zeichnung zeigt
- Fig.1: eine perspektivische Darstellung einer Klotzbremseinrichtung gemäß einer ersten Ausführungsform der Erfindung mit einem Bremsbalken in Form eines Gehäuses, das gleichzeitig die Zylinder von Zylinder-Kolbentrieben bildet;
- Fig.2: eine Schnittdarstellung durch einen Teil des Gehäuses mit einem Zylinder-Kolbentrieb der Klotzbremseinrichtung;
- Fig.3: Gehäusehälften des Gehäuses von Fig.1;
- Fig.4: eine vergrößerte Schnittdarstellung der Zylinder-Kolbentriebe;
- Fig.5: eine Schnittdarstellung entlang der Linie V-V von Fig.4;
- Fig.6a: eine Schnittdarstellung entlang der Linie Vla von Fig.4;
- Fig.6b: eine Schnittdarstellung entlang der Linie Vlb von Fig.4;
- Fig.7: die Zylinder-Kolbentriebe von Fig.4 bei gelöster Feststellbremse und bei zugespannter Betriebsbremse;
- Fig.8: die Zylinder-Kolbentriebe von Fig.4 bei zugespannter Feststellbremse;
- Fig.9: eine Schnittdarstellung einer einzelnen Hängelasche;
- Fig.10: eine vergrößerte Schnittdarstellung einer Klotzbremseinrichtung gemäß einer weiteren Ausführungsform;
- Fig.11: eine Ansicht von unten auf ein Drehgestell mit einer Klotzbremseinrichtung gemäß einer weiteren Ausführungsform;
- Fig.12: eine Vorderansicht des Drehgestells von Fig.11;
- Fig.13: einen Teilschnitt einer weiteren Ausführungsform einer Klotzbremseinrichtung.

### Beschreibung der Ausführungsbeispiele

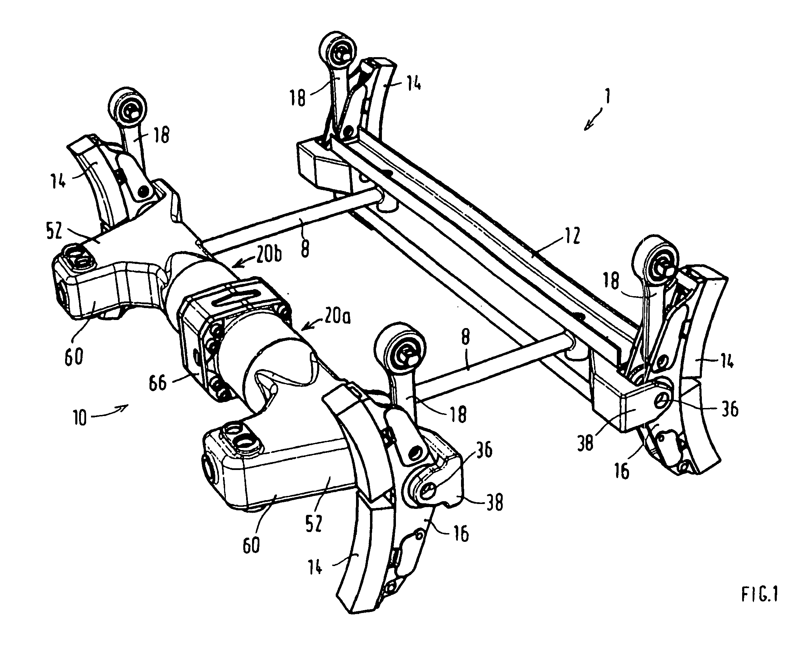

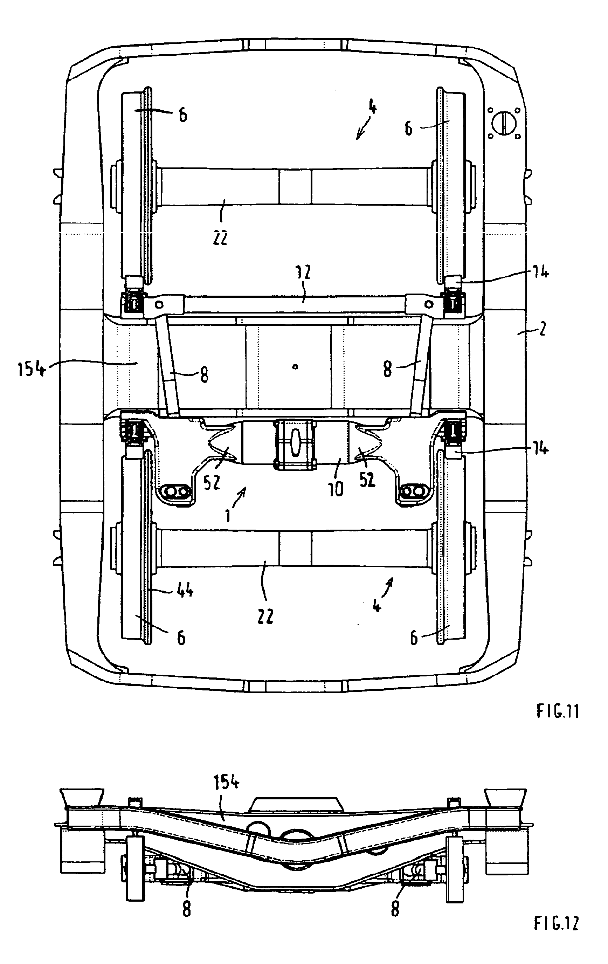

In Fig.1 ist eine Klotzbremseinrichtung 1 eines Güterwagens gemäß einer bevorzugten Ausführungsform der Erfindung gezeigt. Die Klotzbremseinrichtung 1 ist im Ganzen an einem in Fig.11 gezeigten Drehgestell 2 des Güterwagens hängend befestigt, welches zwei Radsätze 4 mit je zwei Rädern 6 aufweist. Die Klotzbremseinrichtung 1 umfasst vorzugsweise zwei durch Druckstangen 8 miteinander in Verbindung stehende Bremsbalken 10, 12, vier an den Bremsbalken 10, 12 endseitig gehaltene und Bremsklötze 14 tragende Bremsschuhe 16, vier einerseits an den Bremsbalken 10, 12 und andererseits am Drehgestell 2 angelenkte Hängelaschen 18 sowie beispielsweise zwei in dem einem als hohles Gehäuse ausgebildeten Bremsbalken 10 aufgenommene, in Fig.1 nicht sichtbare Bremsaktuatoren 20a, 20b. Die Bremsklötze 14 eines Bremsbalkens 10, 12 sind den Rädern 6 einer Radachse 22 zugeordnet, wobei die Bremsbalken 10, 12 in etwa parallel zu den Radachsen 22 verlaufen. Die beiden Radsätze 4 sind gegenüber dem Drehgestell 2 in bekannter Weise federnd gelagert. Die Federung erlaubt es, dass die beiden Radsätze 4 unter anderem Längs- und Querbewegungen relativ zum Drehgestell 2 ausführen können.

Durch Druckmittelbeaufschlagung von Zylinder-Kolbentrieben 20a, 20b der Bremsaktuatoren werden die Druckstangen 8 derart betätigt, dass die Bremsbalken 10, 12 voneinander weg bewegt und hierdurch die von ihnen getragenen Bremsklötze 14 gegen die Räder 6 in Bremszuspannstellung gebracht werden. Gemäß der ersten Ausführungsform von Fig.1 sind die Druckstangen 8 im wesentlichen senkrecht zu den Bremsbalken 10, 12 angeordnet.

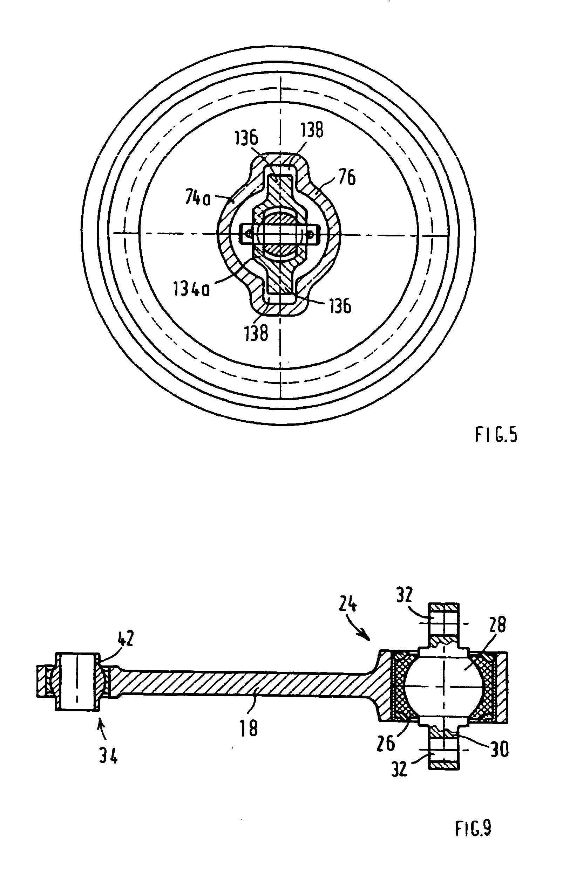

Die Hängelaschen 18 sind am Drehgestell 2 vorzugsweise allseitig schwenkbar gelagert. Hierbei wird als Schwenklager beispielsweise ein Sphäroblock 24 verwendet, d.h. ein innerhalb einer Gummihülle 26 mit komplementär sphärischer Lagerfläche gelagerter Kugelkopf 28 eines Kugelbolzens 30, wie aus der Schnittdarstellung durch eine einzelne Hängelasche 18 gemäß Fig.9 hervorgeht. Der Kugelbolzen 30 wird vorzugsweise als Flachbolzen mit zwei Durchgangsbohrungen 32 an den Enden ausgeführt, wobei der Flachbolzen 30 vorzugsweise an einem nicht dargestellten Längsbalken des Drehgestells 2 aufgenommen ist. Die allseitig schwenkbare Lagerung der Hängelaschen 18 erlaubt zum einen, dass die Bremsbalken 10, 12 zusammen mit den Bremsklötzen 14 den Querbewegungen der Radsätze 4 in Richtung der Radachsen 22 folgen können, um zu gewährleisten, dass sie stets den Bremsflächen der Räder 6 gegenüberliegen. Zum andern ermöglicht der Sphäroblock 24 ein Verschwenken der Hängelaschen 18 in Längs- bzw. Fahrtrichtung. Eine solche Schwenkbewegung findet beispielsweise statt, wenn die Bremsaktuatoren 20a, 20b betätigt werden und sich folglich die radseitigen Enden 34 der Hängelaschen 18 quer zu den Radachsen 22 voneinander weg oder aufeinander zu bewegen. Darüber hinaus muss eine solche Drehmöglichkeit für die Hängelaschen 18 gegeben sein, um den an den Bremsklötzen 14 auftretenden Verschleiß ausgleichen zu können. Folglich müssen die Hängelaschen 18 in wenigstens zwei Drehfreiheitsgraden in Bezug zum Drehgestell 2 verschwenkbar sein, was durch jede Art von sphärischem Lager oder durch ein ausreichend großes Spiel der Lagerung der Hängelaschen 18 am Drehgestell realisierbar ist. Die den Kugelkopf 28 umschließende Gummihülle 26 bewirkt durch ein Rückstellmoment infolge ihrer Elastizität, dass sich die Klotzbremseinrichtung 1 beim Übergang von der Zuspannstellung in die Lösestellung in die Ausgangslage zurückstellt, in welcher die Bremsklötze 14 nahezu äquidistant von den zugeordneten Bremsflächen der Räder 6 entfernt sind.

Wie am besten anhand von Fig.1 zu sehen ist, sind die Bremsklötze 14 tragenden Bremsschuhe 16 an den Bremsbalken 10, 12 um parallel zu den Radachsen 22 verlaufende Schwenkachsen schwenkbar angelenkt. Hierdurch sind die Bremsschuhe 16 kippbar und können sich beim Bremsen lageoptimal an die Bremsflächen der Räder 6 anlegen. Die Schwenklagerung wird beispielsweise durch Bremsschuhbolzen 36 realisiert, welche durch Durchgangsbohrungen in gabelförmig ausgebildeten, je endseitig an den Bremsbalken 10, 12 angeordneten, die Bremsschuhe 16 umgreifenden Aufnahmen 38 sowie durch eine zentrale Durchgangsbohrung des jeweiligen Bremsschuhs 16 gesteckt sind.

Bevorzugt sind die Hängelaschen 18 mit ihrem radseitigen Ende 34 direkt an den Bremsschuhen 16 mittels eines weiteren sphärischen Lagers 40 angelenkt, das beispielsweise eine in der Hängelasche 18 gelagerte sphärische Hülse 42 umfasst, die durch einen Hängelaschenbolzen am zugeordneten Bremsschuh 16 befestigt ist, wie aus Fig.9 hervorgeht. Diese Kinematik erlaubt eine Schrägstellung der Hängelaschen 18 bei Querbewegungen der Radachsen 22, während die an den radial vorstehenden Spurkränzen 44 der Räder 6 seitlich anstehenden und durch den Bremsschuhbolzen weiterhin senkrecht gehaltenen Bremsschuhe 16 in der Radebene im wesentlichen parallel zur Radbremsfläche ausgerichtet bleiben.

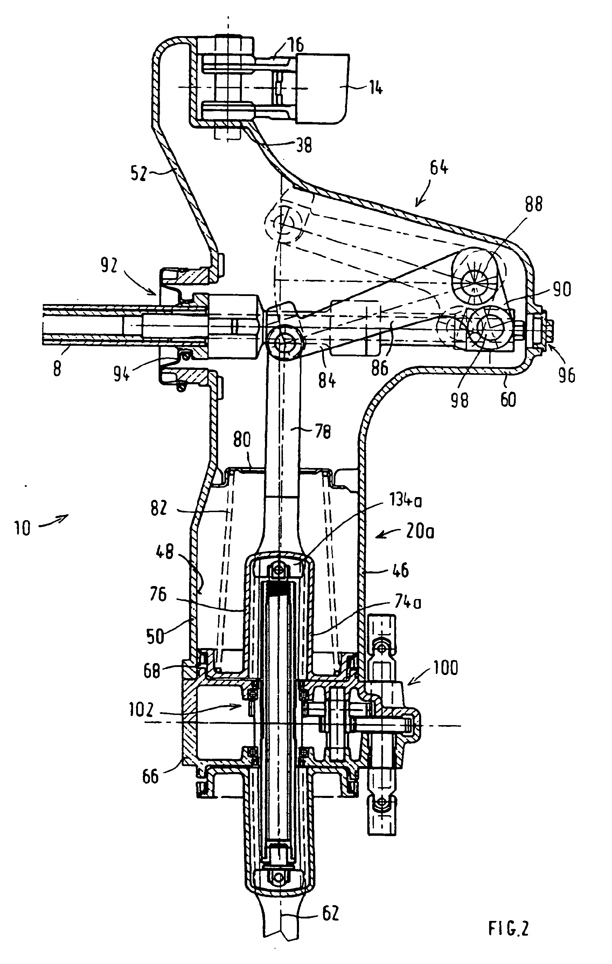

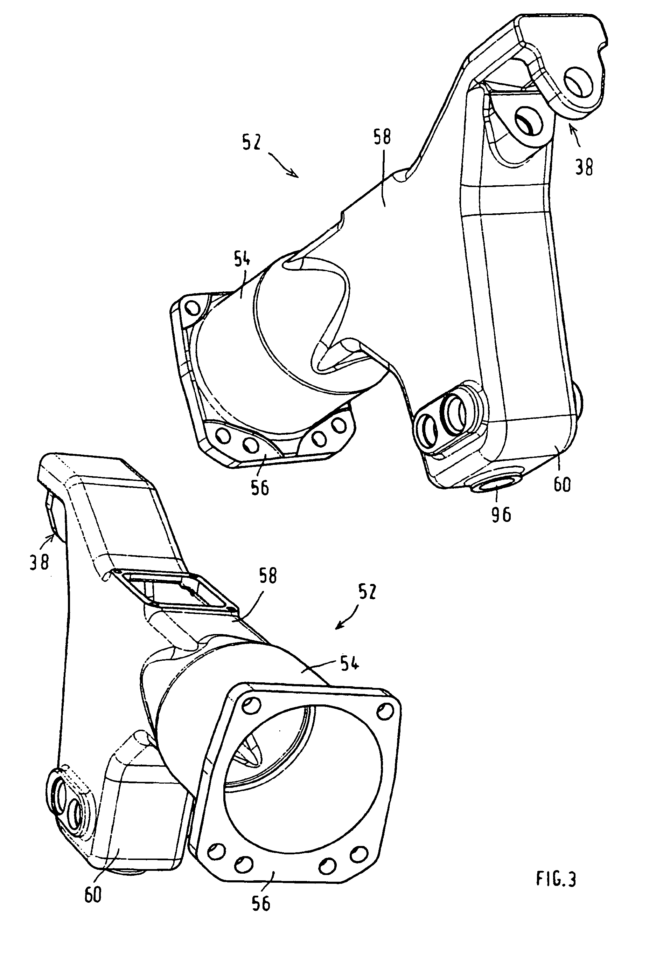

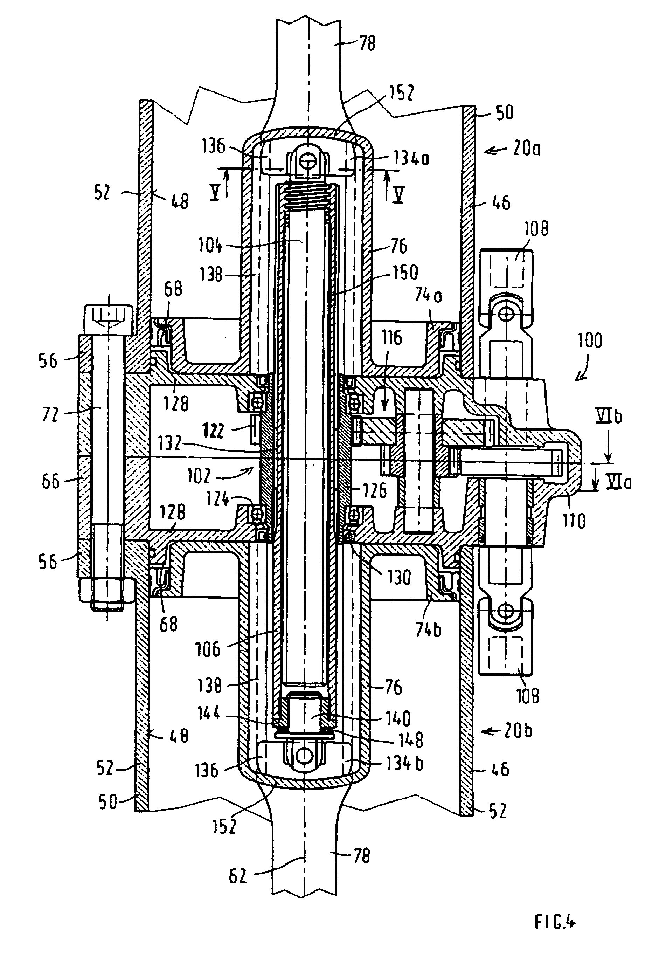

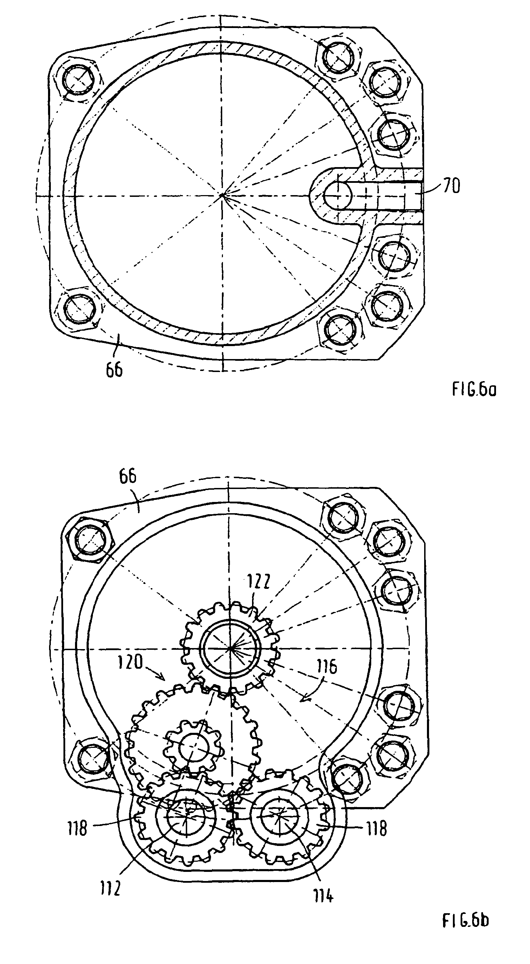

In dem als hohles Gehäuse ausgebildeten einen Bremsbalken 10 sind zwei koaxiale und gegenläufig arbeitende Zylinder-Kolbentriebe 20a, 20b integriert. Dabei bilden zumindest Abschnitte des Bremsbalkens 10 selbst die Zylinder 46 der Zylinder-Kolbentriebe 20a, 20b, wie insbesondere aus Fig. 2 hervorgeht. Genauer werden die Zylinderlaufflächen 48 der Zylinder 46 der Zylinder-Kolbentriebe 20a, 20b vorzugsweise unmittelbar durch eine innere Umfangsfläche der Wandung 50 des hohlen Bremsbalkens 10 gebildet. Alternativ können die Zylinderlaufflächen 48 auch durch von der Wandung 50 des Bremsbalkens 10 getragene Zylinderlaufbuchsen gebildet werden. Wie am besten aus Fig.11 hervorgeht, weist das den einen Bremsbalken 10 repräsentierende Gehäuse zwei in Bezug zu einer Mittelebene des Drehgestells 2 symmetrisch umschlagbar und identisch ausgebildete Gehäusehälften 52 als hohle Gussformlinge auf, von welchen jede Gehäusehälfte 52 abschnittsweise einen Zylinder 46 eines Zylinder-Kolbentriebs 20a, 20b bildet. Diese Gehäusehälften 52 sind in Fig.3 einzeln dargestellt, wobei die im montierten Zustand einander gegenüberliegenden Abschnitte 54 der Gehäusehälften 52 je einen zylindrischen Querschnitt haben, um an der inneren Umfangsfläche die Zylinderlauffläche 48 auszubilden. Dem Ende des zylindrischen Abschnitts 54 ist zudem ein Flansch 56 angeformt. Dem zylindrischen Abschnitt 54 schließt sich nach außen hin ein Abschnitt 58 mit im wesentlichen rechteckförmigem Querschnitt und mit einer sich quer zu einer Mittelachse 62 der Zylinder-Kolbentriebe 20a, 20b erstreckenden sackartigen Ausformung 60 an, in welcher je ein Umlenkungsgetriebe 64 zur Umlenkung der längs der Mittelachsen 62 der Zylinder-Kolbentriebe 20a, 20b erfolgenden Kolbenbewegungen auf die senkrecht zu diesen angeordneten Druckstangen 8 aufgenommen ist. Den von den Flanschen 56 weg weisenden Enden der Gehäusehälften 52 sind die bereits erwähnten, gabelförmigen Aufnahmen 38 für die Bremsschuhe 16 angeformt. Wie am besten Fig.4 zeigt, ist zwischen den beiden Gehäusehälften 52 ein zweischaliges Zwischengehäuse 66 angeordnet, in welchem ein zentraler, in der Schnittebene von Fig.6a sichtbarer und je einen Druckraum 68 der Zylinder 46 mit Druckmittel versorgender Druckmittelanschluß 70 ausgebildet ist. Das Zwischengehäuse 66 ist zwischen den Gehäusehälften 52 beispielsweise mittels an den Flanschen 56 angreifenden Zugankern 72 gehalten, die durch Durchgangsbohrungen des Zwischengehäuses 66 hindurchgeführt sind. Der andere, ohne Bremsaktuator ausgeführte Bremsbalken 12 ist konventionell ausgebildet, beispielweise als Doppel-U-Profil und ist endseitig ebenfalls mit gabelförmigen Aufnahmen 38 für Bremsschuhe 16 versehen, wie Fig.1 zeigt.

In Fig.2 ist aus Maßstabsgründen lediglich eine Gehäusehälfte 52 dargestellt, jedoch sind beide Gehäusehälften samt den in ihnen aufgenommenen Baugruppen identisch aufgebaut. Die Kolben 74a, 74b der Zylinder-Kolbentriebe 20a, 20b weisen auf Ihrer Druckseite je eine zentrale becherförmige Ausformung 76 auf, von welcher kopfseitig eine zentrale, mit der Mittelachse 62 koaxiale Kolbenstange 78 nach außen wegragt. Die Kolben 74a, 74b sind durch sich an in den Gehäusehälften 52 gehaltenen Zwischenböden 80 abstützenden Rückstellfedern 82 in Lösestellung vorgespannt. Die Kolbenstange 78 ist an einem längeren Schenkel 84 eines zweischenkeligen Winkelhebels 86 angelenkt, der beispielsweise das Umlenkungsgetriebe 64 bildet. Der Winkelhebel 64 ist von der sackartigen Ausformung 60 der entsprechenden Gehäusehälfte 52 vollständig umschlossen und in Bezug zu dieser mittels einer Bolzenlagerung 88 schwenkbar gelagert. Die beiden Schenkel 84, 90 des Winkelhebels 86 sind in etwa rechtwinkelig zueinander, wobei der kürzere Schenkel 90 an ein Ende der zugeordneten Druckstange 8 angelenkt ist, die aus einer quer zur Mittelachse 62 der Zylinder-Kolbentriebe 20a, 20b angeordneten Öffnung 92 der Gehäusehälfte 52 ragt. Je nachdem, wo die Anlenkbohrung für die Bolzenlagerung 88 des Winkelhebels 86 angeordnet wird, kann ein jeweils anderes Übersetzungsverhältnis erzielt werden, beispielsweise 4/1 oder 3/1. So erhält man für unterschiedliche Schienenfahrzeuge ein breites Bremskraftspektrum, ohne dass hierfür andere Zylinder-Kolbentriebe 20a, 20b und insbesondere andere Zylinderdurchmesser verwendet werden müßten, so dass die erfindungsgemäße Klotzbremseinrichtung 1 als standardisierte Gleichbaueinheit verwendet werden kann. Zur Abdichtung des Gehäuseinneren ist zwischen der Druckstange 8 und der Gehäusehälfte 52 eine flexible Dichtung 94 vorgesehen. Darüber hinaus sind auch weitere Öffnungen des Bremsbalkens 10, beispielsweise Montageöffnungen 96 durch Deckel verschlossen, so dass der Bremsbalken 10 ein geschlossenes Gehäuse bildet. Folglich sind die Winkelhebel 86 samt Ihrer Bolzenlagerung 88, die Zylinder-Kolbentriebe 20a, 20b sowie die Anlenkungen 98 der Druckstangen 8 an die Winkelhebel 86 innerhalb des Bremsbalkens 10 geschützt vor Staub, Spritzwasser und mechanischer Einwirkung gelagert. In beide Druckstangen 8 ist jeweils eine Verschleißnachstelleinrichtung integriert, deren Aufbau und Funktionsweise bekannt ist und daher keiner weiteren Erläuterung bedarf.

Wie am besten aus Fig.4 hervorgeht, ist in dem einen Teil des Bremsbalkens 10 bildenden Zwischengehäuse 66 weiterhin zumindest ein Teil einer Antriebsmechanik 100 einer Feststellbremse aufgenommen, welche einen durch Feststellbremsbetätigungsorgane rotatorisch antreibbaren und mit den Zylinder-Kolbentrieben 20a, 20b koaxialen Mutter-Spindeltrieb 102 umfasst, wobei die Spindel 104 an der Druckseite des Kolbens 74a des einen Zylinder-Kolbentriebs 20a und die Mutter 106 an der Druckseite des Kolbens 74b des anderen Zylinder-Kolbentriebs 20b anschlagbar ausgebildet ist. Zum Zuspannen und Lösen der Feststellbremse wird beispielsweise über an der Seitenfläche des Schienenfahrzeugs angeordnete, aus Maßstabsgründen nicht dargestellte Handräder eine Drehbewegung in vorzugsweise zwei parallel zu den Radachsen 22 verlaufende Gelenkwellen 108 eingeleitet, welche von beiden Seiten her in einen vorspringenden Fortsatz 110 des Zwischengehäuses 66 münden und dort mit je einer Eingangswelle 112, 114 eines Zahnradgetriebes 116 in Drehverbindung stehen, welches am besten in der Schnittzeichnung gemäß Fig.6b zu sehen ist. Da die Feststellbremse in der Praxis von nur einer Seite des Schienenfahrzeugs her betätigt wird, tragen die beiden Eingangswellen 112, 114 miteinander kämmende Zahnräder 118, so dass eine Drehverbindung zwischen den beiden Gelenkwellen 108 besteht. Dabei wird die Feststellbremse durch eine Rechtsdrehung der Handräder zugespannt und durch Linksdrehung gelöst. Zur Weiterleitung der Drehbewegung auf den Mutter-Spindeltrieb 102 sind den Eingangswellen 112, 114 beispielsweise zwei Zahnradstufen 120 nachgeordnet, wobei der Abtrieb des Zahnradgetriebes 116 über ein zentrales Zahnrad 122 erfolgt, welches mit einer koaxialen, im Zwischengehäuse 66 vorzugsweise durch Wälzlager 124 gelagerten, zylindrischen Hülse 126 einstückig ausgebildet ist (Fig.4). Alternativ könnte das zentrale Zahnrad 122 auch auf die Hülse 126 aufgeschrumpft sein. Den Enden der Hülse 126 und den beiden Böden 128 des Zwischengehäuses ist je eine Bewegungsdichtung 130 zwischengeordnet, um die sich axial beidseits anschließenden Druckräume 68 der Zylinder-Kolbentriebe 20a, 20b gegenüber dem Inneren des Zwischengehäuses 66 abzudichten.

Wie Fig.4 am besten zeigt, umschließt die Hülse 126 die Mutter 106 des Mutter-Spindeltriebs 102 und ist mit dieser drehfest verbunden. Zusätzlich ist die Mutter 106 innerhalb der Hülse 126 axial verschieblich aufgenommen. Dies kann beispielsweise dadurch realisiert sein, dass eine Koppelung zwischen der Hülse 126 und die Mutter 106 durch ein Keilwellenprofil 132 oder eine Paßfeder erfolgt. Folglich ist der gesamte Mutter-Spindeltrieb 102 gegenüber der Hülse 126 in Richtung der Mittelachse 62 der Zylinder-Kolbentriebe 20a, 20b axial verschieblich oder schwimmend gelagert. Weiterhin sind die Spindel 104 und die Mutter 106 des Mutter-Spindeltriebs 102 innerhalb der becherförmigen Ausformungen 76 der zugeordneten Kolben 74a, 74b linear verschieblich geführt, wie aus der Schnittdarstellung von Fig.5 hervorgeht. Dies ist beispielsweise dadurch realisiert, dass die Spindel 104 und die Mutter 106 endseitig mit je einem Anschlagkörper 134a, 134b mit vorzugsweise symmetrischen Seitenflügeln 136 versehen sind, welche in komplementär geformte und in axialer Richtung verlaufende Nuten 138 eingreifen, welche an den Innenflächen der Ausformungen 76 der Kolben 74a, 74b ausgebildet sind. Der der Spindel 104 zugeordnete Anschlagkörper 134a ist mit dieser drehfest verbunden, während der der Mutter 106 zugeordnete Anschlagkörper 134b mit einem Wellenstumpf 140 verbunden ist, der gegenüber einem mit der Mutter 106 gekoppelten hülsenförmigen Endstück 144 beispielsweise mittels eines Axialnadellagers 148 drehbar ist. Die Spindel 104 des Mutter-Spindeltriebs 102 ist innerhalb der Mutter 106 durch ein Gewinde 150 verschraubbar, so dass eine über das Zahnradgetriebe 116 eingeleitete Drehung der Hülse 126 ein Verschrauben der Spindel 104 relativ zur Mutter 106 bewirkt, wodurch sich der Mutter-Spindettrieb 102 längt oder verkürzt. Neben der Funktion als Führungselement für die Spindel 104 und die Mutter 106 bzw. als Verdrehsicherung für die Spindel 104 üben diese Anschlagkörper 134a, 134b eine weitere Funktion als Mitnehmer für die Kolben 74a, 74b im Falle einer Feststellbremsung aus. Hierzu sind die Anschlagkörper 134a, 134b kopfseitig komplementär zu den zugeordneten Böden 152 der Ausformungen 76 der Kolben 74a, 74b geformt, beispielsweise ballig. Folglich wirkt die beschriebene Antriebsmechanik 100 der Feststellbremse direkt auf die Kolben 74a, 74b der die Betriebsbremse betätigenden Zylinder-Kolbentriebe 20a, 20b.

In Fig.4 ist die Lösestellung von Betriebsbremse und Feststellbremse gezeigt, in welcher die beiden Kolben 74a, 74b in eingefahrener Stellung die Böden 128 des Zwischengehäuses 66 kontaktieren. Die Anschlagkörper 134a, 134b kontaktieren dabei die Böden 152 der Kolben 74a, 74b in den Ausformungen 76.

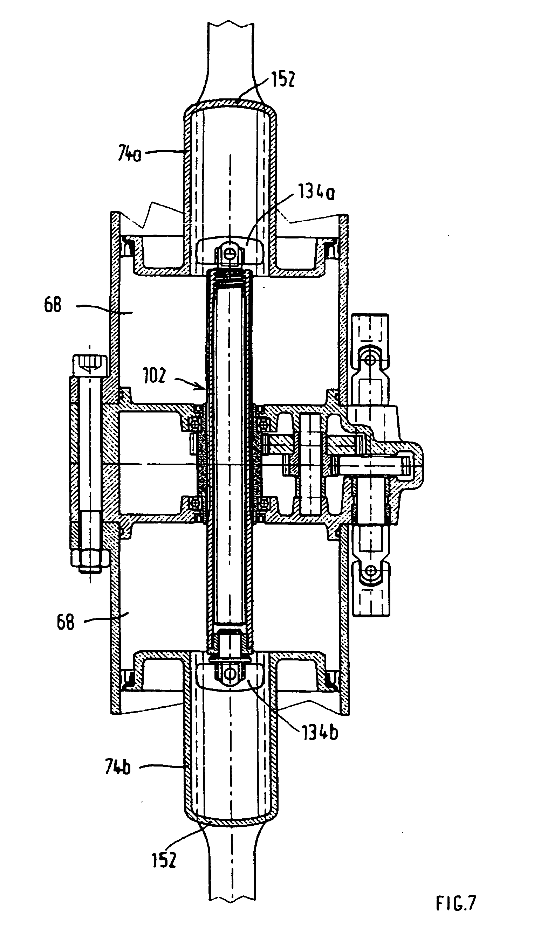

Fig.7 zeigt die Situation, in welcher die Betriebsbremse durch Druckbeaufschlagung der Druckräume 68 der Zylinder-Kolbentriebe 20a, 20b zugespannt, die Feststellbremse aber nach wie vor gelöst ist. Demnach bewegen sich bei einer Betriebsbremsung die beiden Kolben 74a, 74b gegen die Wirkung der Rückstellfedern 82 ähnlich wie bei einer Boxeranordnung nach außen voneinander weg und betätigen über die Kolbenstangen 78 und die Winkelhebel 86 die Druckstangen 8, wodurch die beiden Bremsbalken 10, 12 voneinander weg und die Bremsklötze 14 gegen die Bremsflächen der Räder 6 gepreßt werden. Da die Feststellbremse nicht betätigt wurde, befindet sich der Mutter-Spindeltrieb 102 nach wie vor in eingeschraubter Stellung, wobei die Anschlagkörper 134a, 134b von den zugeordneten Böden 152 der Ausformungen 76 der Kolben 74a, 74b entfernt sind.

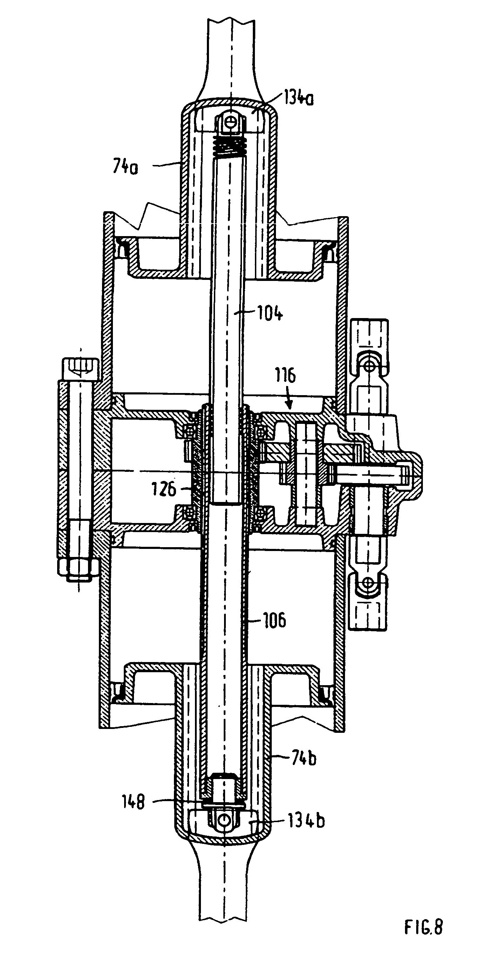

Bei der Stellung gemäß Fig.8 befindet sich hingegen die Feststellbremse in Zuspannstellung, weil aufgrund einer in das Zahnradgetriebe 116 eingeleiteten Drehbewegung die Hülse 126 in Drehung versetzt und dadurch die sich in Bezug zu ihrem Anschlagkörper 134b mittels des Axialnadellagers 148 frei drehbare Mutter 106 gegenüber der durch ihren Anschlagkörper 134a verdrehgesicherten Spindel 104 verschraubt wurde. Infolgedessen hat sich der Mutter-Spindeltrieb 102 beidseitig gelängt, wobei die Längskraft über die Anschlagkörper 134a, 134b auf die Kolben 74a, 74b übertragen wurde und Letztere daraufhin gegen die Wirkung der Rückstellfedern 82 nach außen gedrängt und die Bremsklötze 14 wie bereits bei der Betriebsbremsung beschrieben in Bremseingriffsstellung gebracht wurden. Die Situation von Fig.8 kann auch dadurch hervorgerufen werden, dass zunächst die Betriebsbremse und danach zusätzlich die Feststellbremse zugespannt wird.

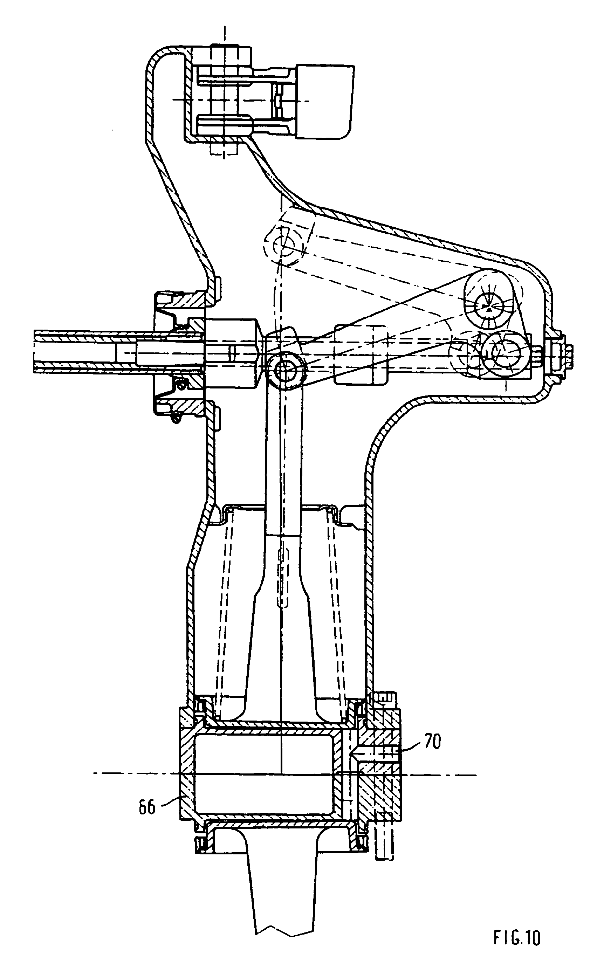

Bei den weiteren Ausführungsbeispielen der Erfindung nach Fig.10, Fig.11 und Fig.12 sind die gegenüber dem vorhergehenden Beispiel gleichbleibenden und gleichwirkenden Teile durch die gleichen Bezugszeilen gekennzeichnet. Im Unterschied zum ersten Ausführungsbeispiel ist bei dem Ausführungsbeispiel von Fig.10 keine Feststellbremse und folglich auch keine entsprechende Antriebsmechanik vorhanden, so dass im Zwischengehäuse 66 lediglich der gemeinsame Druckmittelanschluß 70 samt Zuführkanälen vorhanden ist. Das Zwischengehäuse 66 ist jedoch in beiden Fällen vorzugsweise identisch, um die Anzahl von Gleichteilen verschiedener Bremsvarianten zu erhöhen.

Bei dem ersten Ausführungsbeispiel gemäß Fig.1 sind die senkrecht zu den Bremsbalken 10, 12 angeordneten Druckstangen 8 unterhalb eines Querträgers des Drehgestells geführt. Im Unterschied dazu sind bei dem Ausführungsbeispiel gemäß Fig.11 und Fig.12 die Druckstangen 8 zueinander winklig angeordnet und divergieren vorzugsweise ausgehend von dem einen Bremsbalken 10, in welchem die Zylinder-Kolbentriebe 20a, 20b aufgenommen sind. Hierdurch können die Druckstangen 8 an einem zentralen, nach unten gezogenen Abschnitt eines Querträgers 154 des Drehgestells rechts und links vorbeigeführt werden. Alternativ hierzu könnten die Druckstangen 8 auch durch Durchgangsöffnungen im Querträger 154 geführt sein. In letzterem Fall ist es erforderlich, dass zur Montage und Demontage der Klotzbremseinrichtung 1 die Druckstangen 8 von den Bremsaktuatoren 20a, 20b leicht trennbar sind.

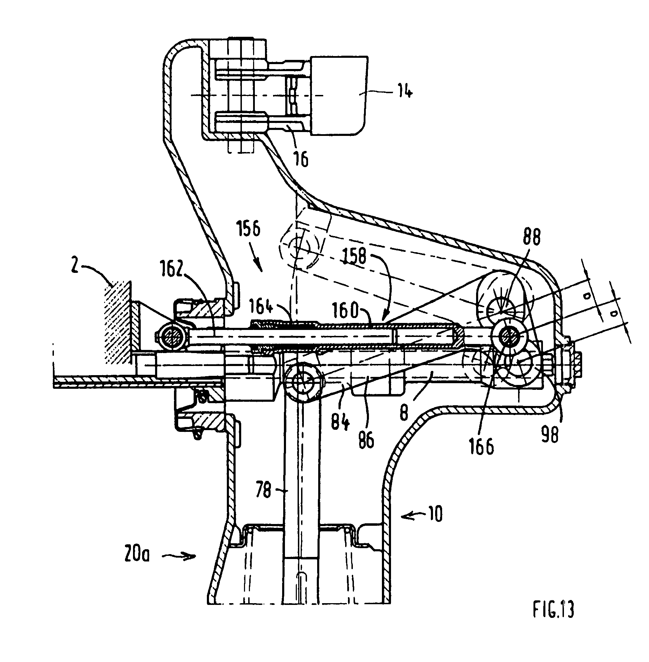

Bei dem Ausführungsbeispiel gemäß Fig.13 ist eine zusätzliche Symmetriereinrichtung 156 vorhanden, um in Lösestellung der Klotzbremseinrichtung 1 einen einseitigen Kontakt der Bremsklötze 14 mit den Rädern 6 zu vermeiden bzw. um gleich große Anlegewege der Bremsklötze 14 zu erzielen. Hierzu ist eine Teleskopeinrichtung 158 mit innerhalb eines Zylinders 160 linear geführtem Stab 162 vorgesehen, wobei mittels eines Reibelements 164 zwischen Stab 162 und Zylinder 160 ein Reibschluss erzeugt wird, welcher einer Längenänderung der Teleskopeinrichtung 158 entgegenwirkt. Die Teleskopeinrichtung 158 ist vorzugsweise parallel zur Fahrzeuglängsrichtung angeordnet, wobei der Stab 162 beispielsweise am Drehgestell 2 und der Zylinder 160 an dem kürzeren Schenkel 90 des Winkelhebels 86 mittig zwischen dessen Bolzenlagerung 88 und dessen Anlenkung 98 an der Druckstange 8 an einem Anlenkpunkt 166 angelenkt ist, was durch die identischen Maße "a" angedeutet ist. Die Funktion der Symmetriereinrichtung 156 ist dann wie folgt : Bei einer Betriebsbremsung wird die Druckstange 8 um einen Gesamtweg betätigt, welcher sich aus der Summe des Anlegeweges der Bremsklötze 14 des einen Bremsbalkens 10 an die zugeordneten Räder 6 und des Anlegeweges der Bremsklötze 14 des anderen Bremsbalkens 12 an die zugeordneten Räder 6 zusammensetzt. Bei gleich großen Anlegewegen, d.h. bei in Bezug zu den zugeordneten Rädern 6 äquidistant oder "symmetrisch" angeordneten Bremsklötzen 14 ändert die Teleskopeinrichtung 158 ihre Länge nicht, da der Anlenkpunkt 166 des Zylinders 160 am Winkelhebel 86 bei einer Bremsung aufgrund der Verlagerung des den Winkelhebel 86 tragenden Bremsbalkens 12 um den halben Gesamtweg in der einen Richtung und einer gleichzeitigen Verlagerung aufgrund der Drehung des Winkelhebels 86 in der Gegenrichtung seine Lage in Bezug zum Drehgestell 2 nicht verändert. Folglich bleibt auch die Lage der am Drehgestell 2 hängenden Klotzbremseinrichtung 1 in der Lösestellung unverändert. Bei unterschiedlichen Anlegewegen, d.h. bei in Bezug zu den zugeordneten Rädern 6 nicht äquidistant angeordneten Bremsklötzen 14 besteht die Gefahr, dass die Bremsklötze 14 auch bei gelöster Bremse an den Rädern 6 schleifen. Bei einer Betätigung der Betriebsbremse oder der Feststellbremse legen sich in diesem Fall die Bremsklötze 14 des Bremsbalkens 10 bzw.12 mit dem kürzeren Anlegeweg zuerst an die zugeordneten Räder 6 an, wobei sich aufgrund der weiteren Betätigung der Zylinder-Kolbentriebe 20a, 20b die Teleskopeinrichtung 158 unter Überwindung des Reibschlusses zwischen Stab 162 und Zylinder 160 verlängert oder verkürzt, bis der längere Anlegeweg der Bremsklötze 6 des anderen Bremsbalkens 10 bzw. 12 zurückgelegt ist. Beim Lösen der Bremse kehren die beiden Bremsbalken 10, 12 in eine symmetrische Lösestellung mit gleich großen Anlegewegen zurück, wobei der in der Teleskopeinrichtung 158 wirkende Reibschluss ein Rückstellen in eine unsymmetrische Lage verhindert. Dann ist hängende Klotzbremseinrichtung 1 gegenüber dem Drehgestell 2 neu ausgerichtet und zentriert.

### Bezugszahlenliste

- 1: Klotzbremseinrichtung
- 2: Drehgestell
- 4: Radsätze
- 6: Räder
- 8: Druckstangen
- 10: Bremsbalken
- 12: Bremsbalken
- 14: Bremsklötze
- 16: Bremsschuhe
- 18: Hängelaschen
- 20a,b: Zylinder-Kolbentriebe
- 22: Radachsen
- 24: Sphäroblock
- 26: Gummihülle
- 28: Kugelkopf
- 30: Kugelbolzen
- 32: Durchgangsbohrungen
- 34: Ende
- 36: Bremsschuhbolzen
- 38: Aufnahmen
- 40: Lager
- 42: Hülse
- 44: Spurkränze
- 46: Zylinder
- 48: Zylinderlauffläche
- 50: Wandung
- 52: Gehäusehälften
- 54: zyl. Abschnitt
- 56: Flansch
- 58: Abschnitt
- 60: Ausformung
- 62: Mittelachse
- 64: Umlenkungsgetriebe
- 66: Zwischengehäuse
- 68: Druckraum
- 70: Druckmittelanschluß
- 72: Zuganker
- 74a,b: Kolben
- 76: Ausformung
- 78: Kolbenstange
- 80: Zwischenboden
- 82: Rückstellfedern
- 84: Schenkel
- 86: Winkelhebel
- 88: Bolzenlagerung
- 90: Schenkel
- 92: Öffnung
- 94: Dichtung
- 96: Montageöffnung
- 98: Anlenkung
- 100: Antriebsmechanik
- 102: Mutter-Spindeltrieb
- 104: Spindel
- 106: Mutter
- 108: Gelenkwellen
- 110: Fortsatz
- 112: Eingangswelle
- 114: Eingangswelle
- 116: Zahnradgetriebe
- 118: Zahnräder
- 120: Zahnradstufen
- 122: zentrales Zahnrad
- 124: Wälzlager
- 126: Hülse
- 128: Boden
- 130: Bewegungsdichtung
- 132: Keilwellenprofil
- 134a,b: Anschlagkörper
- 136: Seitenflügel
- 138: Nuten
- 140: Wellenstumpf
- 144: Endstück
- 148: Axialnadellager
- 150: Gewinde
- 152: Boden
- 154: Querträger
- 156: Symmetrieeinrichtung
- 158: Teleskopeinrichtung
- 160: Zylinder
- 162: Stab
- 164: Reibelement
- 166: Anlenkpunkt

## Patentansprüche

1. Klotzbremseinrichtung (1) für ein Drehgestell (2) eines Schienenfahrzeugs beinhaltend zwei Radsätze (4) mit je zwei Rädern (6), sowie zwei jeweils einer Radachse (22) zugeordnete und parallel zu dieser verlaufende Bremsbalken (10, 12), welche Bremsklötze (14) tragen und über Druckstangen (8) miteinander in Verbindung stehen, die durch wenigstens einen druckmittelbetätigten Zylinder-Kolbentrieb (20a, 20b) zum Bremseingriff der Bremsklötze (14) mit zugeordneten Bremsflächen der Räder (6) betätigbar sind, wobei die Klotzbremseinrichtung (1) als Bremsmodul beinhaltend wenigstens die Bremsbalken (10, 12), die Druckstangen (8), die Bremsklötze (14) und den Zylinder-Kolbentrieb (20a, 20b) durch Hängelaschen (18) am Drehgestell (2) hängend befestigt ist, und wobei die Hängelaschen (18) durch jeweils sphärische Lager (24, 40) einendseitig am Drehgestell (2) und anderendseitig an den Bremsbalken (10, 12) allseitig schwenkbar gelagert sind, **dadurch gekennzeichnet, dass** die drehgestellseitigen sphärischen Lager (24) Sphäroblöcke beinhalten, wobei ein Kugelkopf (28) eines Kugelbolzens (30) innerhalb einer Gummihülle (26) mit komplementärer sphärischer Lagerfläche gelagert ist.

2. Klotzbremseinrichtung nach Anspruch 1, **dadurch gekennzeichnet, dass** die Bremsklötze (14) tragende Bremsschuhe (16) an den Bremsbalken (10, 12) um parallel zu den Radachsen (22) verlaufende Schwenkachsen schwenkbar angelenkt sind.

3. Klotzbremseinrichtung nach Anspruch 2, **dadurch gekennzeichnet, dass** die schwenkbare Lagerung durch Bremsschuhbolzen (36) realisiert ist, welche durch Durchgangsbohrungen in gabelförmig ausgebildeten, je endseitig an den Bremsbalken (10, 12) angeordneten, die Bremsschuhe (16) umgreifenden Aufnahmen (38) sowie durch eine zentrale Durchgangsbohrung des Bremsschuhs (16) gesteckt sind.

4. Klotzbremseinrichtung nach wenigsten einem der vorhergehenden Ansprüche, **dadurch gekennzeichnet, dass** die Hängelaschen (18) an den die Bremsklötze (14) tragenden Bremsschuhen (16) allseitig schwenkbar gelagert sind.

5. Klotzbremseinrichtung nach wenigstens einem der vorhergehenden Ansprüche, **dadurch gekennzeichnet, dass** die sphärischen Lager (24) elastischdämpfende Elemente (26) beinhalten.

## Claims

1. A tread brake device (1) for a bogie (2) of a railway vehicle containing two wheel sets (4) each with two wheels (6), and two brake beams (10, 12), each of which is assigned and runs parallel to a wheel axle (22), which hold brake blocks (14) and are connected to one another by pressure rods (8) which can be actuated by at least one pressure-medium-actuated cylinder/piston drive (20a, 20b) in order to engage the brake blocks (14) with assigned braking surfaces on the wheels (6) for the purposes of braking, the tread brake device (1) being suspended from the bogie (2) by hanging support links (18) as a brake module containing at least the brake beams (10, 12), the pressure rods (8), the brake blocks (14) and the cylinder/piston drive (20a, 20b), and the hanging support links (18) being mounted on spherical bearings (24, 40) such that they are able to pivot universally on the bogie (2) at one end and on the brake beams (10, 12) at the other.
**characterised in that**
the spherical bearings (24) on the bogie side contain spherical blocks, a ball head (28) of a ball-end bolt (30) being mounted inside a rubber sleeve (26) with a complementary spherical bearing surface.

2. A tread brake device in accordance with claim 1,
**characterised in that**
the brake shoes (16) holding the brake blocks (14) are attached to the brake beams (10, 12) such that they are able to pivot about axes running parallel to the wheel axles (22).

3. A tread brake device in accordance with claim 2,
**characterised in that**
the pivoting mount is achieved by means of brake shoe bolts (36) which are inserted though holes in fork-shaped receivers (38) whose ends are positioned on the brake beams (10, 12) and which encompass the brake shoes (16), and through a hole in the brake shoe (16).

4. A tread brake device in accordance with at least one of the preceding claims,
**characterised in that**
the hanging support links (18) are mounted on the brake shoes (16) which hold the brake blocks (14) in such a manner that they are able to pivot universally.

5. A tread brake device in accordance with at least one of the preceding claims,
**characterised in that**
the spherical bearings (24) contain elastically damping elements (26).

## Revendications

1. Dispositif (1) de freinage à sabots pour un bogie (2) d'un véhicule ferroviaire comprenant deux essieux montés (4) pourvus chacun de deux roues (6), et deux barres de frein (10, 12) associées chacune à un essieu respectif (22) et s'étendant parallèlement à cet essieu, qui portent des sabots de frein (14) et sont reliées entre elles via des tiges de compression (8) qui, par au moins un entraînement (20a, 20b) à cylindre-piston actionné par fluide sous pression, peuvent être actionnées en vue de l'engagement de freinage des sabots de frein (14) avec des surfaces de freinage associées des roues (6), sachant que le dispositif (1) de freinage à sabots, réalisé sous forme de module de freinage comprenant au moins les barres de frein (10, 12), les tiges de compression (8), les sabots de frein (14) et l'entraînement (20a, 20b) à cylindre-piston, est fixé en suspension sur le bogie (2) par des pattes de suspension (18), et sachant que les pattes de suspension (18) sont, par des paliers sphériques respectifs (24, 40) montées à pivotement polydirectionnel à une extrémité sur le bogie (2) et à l'autre extrémité sur les barres de frein (10, 12), **caractérisé en ce que** les paliers sphériques (24) côté bogie contiennent des blocs sphériques, une tête sphérique (28) d'une rotule (30) étant montée à l'intérieur d'une enveloppe en caoutchouc (26) ayant une surface d'appui sphérique complémentaire.

2. Dispositif de freinage à sabots suivant la revendication 1, **caractérisé en ce que** les porte-sabots (16), qui portent les sabots de frein (14), sont articulés sur les barres de frein (10, 12) à pivotement autour d'axes de pivotement s'étendant parallèlement aux essieux (22).

3. Dispositif de freinage à sabots suivant la revendication 2, **caractérisé en ce que** le montage pivotant est réalisé par des pivots (36) de porte-sabots qui sont passés à travers des perçages traversants dans des logements (38) réalisés en forme de fourche, disposés chacun terminalement sur les barres de frein (10, 12) et s'engageant autour des porte-sabots (16), et à travers un perçage traversant central du porte-sabots (16).

4. Dispositif de freinage à sabots suivant au moins une des revendications précédentes, **caractérisé en ce que** les pattes de suspension (18) sont articulées à pivotement polydirectionnel sur les porte-sabots (16) portant les sabots de frein (14).

5. Dispositif de freinage à sabots suivant au moins une des revendications précédentes, **caractérisé en ce que** les paliers sphériques (24) contiennent des éléments (26) d'amortissement élastique.
